# EUROPÄISCHE PATENTSCHRIFT

(11) **EP 1 723 352 B1**
(45) Veröffentlichungstag und Bekanntmachung des Hinweises auf die Patenterteilung: **25.02.2009**
(21) Anmeldenummer: 05715951.9
(22) Anmeldetag: 11.03.2005
(51) Int. Cl.: F16H 55/08, F16H 15/26

(54) **MOTORHILFSANTRIEB EINES KRAFTFAHRZEUGES MIT EINEM ZAHNRADGETRIEBE**
ENGINE AUXILIARY DRIVE FOR A MOTOR VEHICLE WITH A TOOTHED-GEAR DRIVE
ENTRAINEMENT AUXILIAIRE DE MOTEUR DANS UN VEHICULE A MOTEUR, POURVU D'UNE TRANSMISSION PAR ENGRENAGES

(30) Priorität: 11.03.2004 DE 102004012347
(43) Veröffentlichungstag der Anmeldung: 22.11.2006
(73) Patentinhaber: IMS Gear GmbH, 78166 Donaueschingen (DE); Magna Drivetrain AG & Co KG, 8502 Lannach (AT)
(72) Erfinder: OBERLE, Stephan, 78048 Villingen-Schwenningen (DE); FRIEDRICH, Christian, A-8010 Graz (AT)
(74) Vertreter: Göhring, Robert
(86) Internationale Anmeldenummer: PCT/EP2005/002579
(87) Internationale Veröffentlichungsnummer: WO 2005/088168

(56) Entgegenhaltungen:
- DE-A1- 1 775 616
- DE-A1- 2 808 030
- DE-A1- 4 107 659
- DE-A1- 19 523 015
- DE-A1- 19 909 191
- DE-B1- 1 625 557
- FR-A- 1 495 878
- US-A- 2 308 558
- US-A- 4 051 745
- US-B1- 6 450 890
- PATENT ABSTRACTS OF JAPAN Bd. 2003, Nr. 04, 2. April 2003 (2003-04-02) & JP 2002 364731 A (TOYOTA MOTOR CORP), 18. Dezember 2002 (2002-12-18) in der Anmeldung erwähnt
- PATENT ABSTRACTS OF JAPAN Bd. 011, Nr. 318 (M-632), 16. Oktober 1987 (1987-10-16) & JP 62 101967 A (TOYOTA CENTRAL RES & DEV LAB INC; others: 01), 12. Mai 1987 (1987-05-12) in der Anmeldung erwähnt

## Beschreibung

Die Erfindung betrifft einen Motorhilfsantrieb eines Kraftfahrzeuges mit einem Zahnradgetriebe gemäß den Merkmalen des Oberbegriffs des Patentanspruchs 1. Ein derartiger Antrieb ist aus der US-B-6 450 890 bekannt.

Unter Motorhilfsantrieb sind jegliche Antriebe innerhalb eines Kraftfahrzeuges zu verstehen, die nicht unmittelbar zum Antrieb der Räder und damit direkt zur Fortbewegung führen, sondern mit denen Hilfseinrichtungen innerhalb des Kraftfahrzeuges vom Motor angetrieben werden. Zu solchen Motorhilfsantrieben gehören insbesondere die Antriebe von Nockenwellen, Ölpumpen oder Ausgleichswellen von Verbrennungskraftmaschinen. Mit solchen Ausgleichswellen können die insbesondere bei Vierzylinderverbrennungsmotoren so unangenehmen Vibrationen deutlich reduziert werden.

Mit den bekannten Ausgleichswellen werden Massenkräfte und Massenmomente erzeugt, die den von der Brennkraftmaschine erzeugten entgegenwirken und diese so auslöschen. Dazu werden diese mit einer bestimmten Übersetzung (1:1 oder 1:2, je nachdem, welcher Ordnung die auszulöschenden Kräfte sind) und einer bestimmten Phasenlage von der Kurbelwelle aus angetrieben.

Zum Antrieb der Antriebswellen wird regelmäßig ein Zahnradgetriebe mit einer Zahnpaarung von zwei kämmenden Zahnrädern eingesetzt, bei dem ein erstes Zahnrad auf der Kurbelwelle sitzt und mit einem zweiten, auf der Ausgleichswelle sitzenden Zahnrad kämmt.

Es ist klar, dass es bei solchen Motorhilfsantrieben und insbesondere bei den Antrieben für Ausgleichswellen regelmäßig zu enormen Belastungen und Beanspruchungen der beteiligten Zahnradpaarungen kommt. Diese Beanspruchungen sind auf die Zahnflanken wirkende Stöße, die eine entsprechend den Dreheigenfrequenzen und den Erregungsfrequenzen (die Drehzahl der Kurbelwelle eines Kolbenmotors pulsiert) der Systeme pulsierende Flächenpressung an den Zahnflanken mit hohen Spitzenwerten hervorrufen. Diese können zur Zerstörung der Zahnflanken oder zum Zahnfußbruch führen. Die Zahnräder werden deshalb für diese Anwendungen regelmäßig aus Metall hergestellt, weil mit Metallzahnrädern eine ausreichend hohe Festigkeit erreicht ist und Metallzahnräder damit den starken Belastungen gewachsen sind.

Üblich bei solchen Metallzahnrädern ist eine evolventische Verzahnung, weil diese leicht herzustellen ist. Bei einer Evolventenverzahnung sind die wirksamen Profile der Zahnflanken - also die Profile der Zahnflanken, die beim Kämmen der Zähne miteinander in Kontakt treten und über die eine Kraftübertragung erfolgt - Kreisevolventen, d.h. sie beschreiben eine Kurve, die man erhält, wenn man in sämtlichen Punkten eines Kreises eine Tangente konstruiert und auf den Tangenten die Länge des Bogens vom Berührpunkt von der Tangente mit dem Kreis bis zu einem bestimmten festen Punkt des Kreises abträgt. Bei außenverzahnten Rädern sind die wirksamen Profile einer Evolventenverzahnung vom Zahninneren nach außen gesehen immer konvex. Typisch bei evolventisch ausgelegten Zahnrädern ist die Tatsache, dass die Zahnräder beim Abwälzen aufeinander lediglich im Schnitt gesehen punktförmig miteinander in Berührung kommen. Im dreidimensionalen Raum gesehen wälzen die Zahnräder linienförmig aufeinander ab, wobei die Berührungslinie parallel zu den Zahnradachsen liegt, sofern eine Geradverzahnung gewählt ist. Bei Schrägverzahnungen liegt die Berührungslinie leicht schräg auf der Zahnflanke.

Zahnräder mit Evolventenverzahnung lassen sich einfach und genau mit dem Hüllschnittverfahren herstellen, bei dem ein geradliniges und somit einfaches und kostengünstiges Bezugsprofil als Werkzeug verwendet wird. Ein weiterer Vorteil dieser Zahngeometrie ist darin zu sehen, dass unterschiedliche Zahnformen und Achsabstände mit dem gleichen Werkzeug lediglich durch eine Profilverschiebung hergestellt werden können. Im Betrieb zeichnen sich Zahnräder mit einer Evolventenverzahnung dadurch aus, dass die Richtung und die Größe der Zahnnormalkraft während des Eingriffs der Zähne konstant ist, woraus eine gleichmäßige Belastung des gesamten Getriebes, insbesondere der Getriebelager resultiert.

Allerdings zeichnen sich kämmende Metallzahnräder mit Evolventenverzahnung durch eine verhältnismäßig starke Geräuschentwicklung während des Kämmens aus. Diese Geräuschentwicklung wird zudem verstärkt, wenn das Kämmen unter stark wechselnden Lastbedingungen erfolgt.

Es ist darüber hinaus bekannt und üblich, in derartigen Systemen metallische Zahnradpaare mit Schrägverzahnung und mit besonders genau ermitteltem und eng toleriertem Zahnflankenspiel zu verwenden. Damit wird vorwiegend das Eingriffsgeräusch vermindert, die dynamischen Beanspruchungen aber kaum. Schrägverzahnte Zahnräder sind aber relativ teuer in der Herstellung und erfordern besonders spielarme und für die Aufnahme von Axialkräften geeignete Lager. Die Axialkräfte pulsieren ihrerseits auch wieder und können hörbare Schwingungen hervorrufen.

In einer verbesserten Ausführungsform hierzu, die z.B. in JP2002-364731 A beschrieben ist, wird zumindest eines der beiden Zahnräder drehelastisch und gegebenenfalls auch drehschwingungsdämpfend mit seiner Welle verbunden. Diese drehelastische Verbindung ist sperrig und aufwendig, weil sie trotzdem in radialer und axialer Richtung das Erfordernis einer ausreichend guten Steifigkeit erfüllen muss. Es muss nämlich ein genaues Einhalten des Flankenspieles und die Aufnahme der Axialkräfte durch die Schrägverzahnung sichergestellt werden. Das bringt zwar eine gewisse Drehentkoppelung, die Wirkung ist aber wegen des kleinen stationären Drehmomentes nur gering. An der Härte der Stöße zwischen den metallischen Flanken ändert sich nur wenig.

Eine weitere Entwicklungsstufe ist aus der DE 199 09 191 bekannt. In dieser ist eines der beiden Zahnräder aus faserverstärktem Kunststoff ausgeführt. Da man dabei von der Festigkeit eines metallischen Zahnrades ausgegangen ist, schien es nötig, die Fasern so zu legen, dass sie beim Ausformen der Verzahnung nicht durchtrennt werden. Das führt zu der in der JP 62-101967 A beschriebenen Lösung, die aber ein sehr arbeitsaufwendiges Einlegen der Verstärkungsfasern in die Spritzform erfordert. Mit diesem Werkstoff ist wohl eine Geräuschdämpfung und in beschränktem Umfang auch eine Schwingungsdämpfung, zumindest aber eine Verlagerung in einen anderen Frequenzbereich, erreicht. Das Hauptübel - die hohe pulsierende Flächenpressung - ist damit aber nicht beseitigt.

Insgesamt hat man mit den faserverstärkten Kunststoffzahnrädern versucht, weitgehend die Festigkeit von Metallzahnrädern zu erreichen. Problematisch hierbei war neben dem komplizierten Herstellprozess für solche faserverstärkten Kunststoffzahnrädern der damit verbundene hohe Preis, der solche Zahnradpaarungen nicht wirtschaftlich verwertbar macht.

Überdies ist aus der DE 41 07 659 A1 ist ein Schneckengetriebe bekannt, bei dem Schnecke und Schneckenrad an ihren kraftschlüssigen Berührungsflächen so optimiert sind, dass sich ein geräuscharmer Betrieb einstellt. Hierfür sind die Zahnfüße jeweils konkav und die Zahnköpfe konvex gestaltet, wobei zwischen diesen konkaven und konvexen Abschnitten jeweils ein evolventischer Zahnmittenteil (vgl. dort Spalte 3, Zeile 7) vorgesehen ist. Die Verwendung des evolventischen Zahnmittenteils führt jedoch dazu, dass zumindest in diesem evolventischen Bereich nur eine punktförmige Berührung der sich kämmenden Zähne möglich ist. Deshalb sind auch diese vorbekannten Schneckengetriebe nicht über ihren gesamten Kämmbereich ausreichend für hohe Lasten tragfähig.

Als weiterer Stand der Technik werden die DE 17 75 616 A1 und die US-A-4 051 745 genannt.

Vor diesem Hintergrund liegt der vorliegenden Erfindung die Aufgabe zugrunde, für einen Motorhilfsantrieb der eingangs genannten Art ein Zahnradgetriebe mit einer erhöhten Tragfähigkeit und insbesondere einer erhöhten, dynamischen Tragfähigkeit zu schaffen, welches einfach und kostengünstig herzustellen ist und sich trotzdem durch eine hohe Lebensdauer auszeichnet.

Diese Aufgabe wird durch einen Antrieb mit den Merkmalen des Anspruchs 1 gelöst.

Weiterbildungen sind Gegenstand der Unteransprüche.

Die Erfindung beruht im wesentlichen darauf, dass die Zahnflanken der Zahnräder im Kraftübertragungsbereich evolventenfrei oder zumindest weitgehend evolventenfrei ausgebildet sind und von einem konkaven Bereich direkt in einen konvexen Bereich übergehen. Dabei besteht das erste Zahnrad vorzugsweise aus homogenem Kunststoff und das zweite Zahnrad vorzugsweise aus einem Werkstoff mit einer größeren Festigkeit als das erste Zahnrad.

Dieser Lösungsansatz verlässt bewusst die bisher verfolgten und von metallischen Zahnrädern ausgehende Entwicklungslinie von hochbelasteten Zahnradpaarungen. Vielmehr wird von den Eigenschaften der am besten geeigneten Kunststoffe selbst ausgegangen, also im Hinblick auf eine einfache Herstellung von Kunststoffen, die nicht faserverstärkt sind oder andere verstärkende Elemente beinhalten. Diese Eigenschaften sind einerseits die verglichen mit Metall geringe statische Festigkeit und andererseits die Zähigkeit und Eigendämpfung, die für eine pulsierende Flächenpressung gut geeignet ist.

So bekannt Kunststoffzahnräder an sich sind, so bedeutet die Verwendung eines nicht faserverstärkten Kunststoffes für hochdynamisch beanspruchte Zahnräder ein radikales Abgehen von der bisherigen Entwicklungsrichtung und ein Bruch mit dem Vorurteil, dass homogene Kunststoffe bei Zahnrädern für dynamische Beanspruchungen aller Art nicht geeignet sind. Dabei wurde die Eignung für die dämpfende Aufnahme von reinen Druckstößen außer Acht gelassen und vergessen, dass das zu übertragende Drehmoment nur klein ist. Die geringe Elastizität reicht aus, um bei Einwirken einer Hertz'schen Pressung eine Vergrößerung der Berührungsfläche zu bewirken. Durch die Vergrößerung der Berührungsfläche wird die Kraft auf eine größere Fläche verteilt - die Flächenpressung sinkt.

Die evolventenfreie oder zumindest weitgehend evolventenfreie Gestaltung der Zahnflanken im Kraftübertragungsbereich mit konvexen und konkaven Abschnitten bewirkt darüber hinaus eine weitere Verringerung der Flächenpressung, weil wegen des in einem größeren Bereich kleinen Abstandes zwischen der konkaven und der konvexen Fläche bereits bei geringer Hertz'scher Pressung eine weitere erhebliche Vergrößerung der Berührungsfläche erreicht wird.

Mit der erfindungsgemäßen Ausbildung der Zahnflanken sind die Krümmungen der Flankenverläufe über die Höhe der Zähne so ausgewählt, dass im Kraftübertragungsbereich einer Wölbung nach innen eine entsprechende Wölbung nach außen auf dem anderen Zahn zugeordnet ist und umgekehrt. Eine flächenförmige Anlage, wie bei vorliegender Erfindung vorgeschlagen, hat im Vergleich zu linienförmigen Anlagen wie beim Stand der Technik von evolventisch gestalteten Zahnflanken üblich, den entscheidenden Vorteil, dass die von einem Zahnrad auf das andere Zahnrad zu übertragende Last auf eine größere Fläche verteilt wird, wodurch die Last der Zähne pro Flächeneinheit sinkt. Dadurch verringert sich zum einen der Verschleiß der Zahnräder, zum anderen aber auch die Gefahr einer Überlastung. Insgesamt steigt somit die Tragfähigkeit der Zahnräder. Durch die erfindungsgemäße Maßnahme, überhaupt keinen evolventischen oder nur einen minimal notwendigen evolventischen Bereich für eine Eingriff der Zähne zu erlauben und vorzusehen, wird die hohe Trag- und Lastfähigkeit des erfindungsgemäßen Getriebes über den gesamten Abwälzbereich erreicht. Durch die Werkstoffwahl wird dies zudem unterstützt.

Gemäß einem Ausführungsbeispiel besteht das Zahnrad mit dem größeren Durchmesser und einer höheren Zähnezahl, also das Zahnrad, das z.B. an die Kurbelwelle eines Verbrennungsmotors gekoppelt ist, aus einem Werkstoff mit einer größeren Festigkeit als der Werkstoff des zweiten, kleineren Zahnrades. Beispielsweise besteht das ersterwähnte Zahnrad aus Stahl und das kleinere Zahnrad aus dem erfindungsgemäßen, homogenen Kunststoff. Homogene Kunststoffzahnräder haben herstelltechnische Vorteile. Kunststoffzahnräder lassen sich nämlich mit Hilfe des kostengünstigen Spritzgussverfahrens herstellen, ohne dass eine anschließende spanende Bearbeitung notwendig ist.

Durch die erfindungsgemäße Reduzierung der Flächenlast pro Zahn lassen sich zudem die Zahndicken der Zahnräder optimieren. Eine besonders gute Optimierung ergibt sich, wenn die Materialeigenschaften der Werkstoffpaarungen einbezogen werden. So sind die Zahndicken des Kunststoffzahnrades gemäß einem weiteren Ausführungsbeispiel größer als die Zahndicken des metallischen Zahnrades. Eine Reduzierung der Zahndicken bringt wiederum Kostenvorteile mit sich, weil dadurch Material eingespart werden kann.

Anzumerken ist, dass die Erfindung sowohl auf ein Zahnradgetriebe mit geradeverzahnten als auch schrägverzahnten Stirnzahnrädern sowie für Schneckenantriebe mit gerad- oder schrägverzahnten Schneckenrädern anwendbar ist.

Die Erfindung wird im folgenden anhand von Ausführungsbeispielen im Zusammenhang mit Figuren näher erläutert. Es zeigen:
- Fig.1: ein Schema eines beispielhaften Massenausgleichsan- triebs, welches mittels einer an die Kurbelwelle gekop- pelten Zahnpaarung nach der Erfindung angetrieben wird,
- Fig.2a: eine Verzahnungsauslegung der in Fig. 1 gezeigten Zahn- radpaarung, und.
- Fig.2b: vergrößerter Ausschnitt aus Fig. 2a.

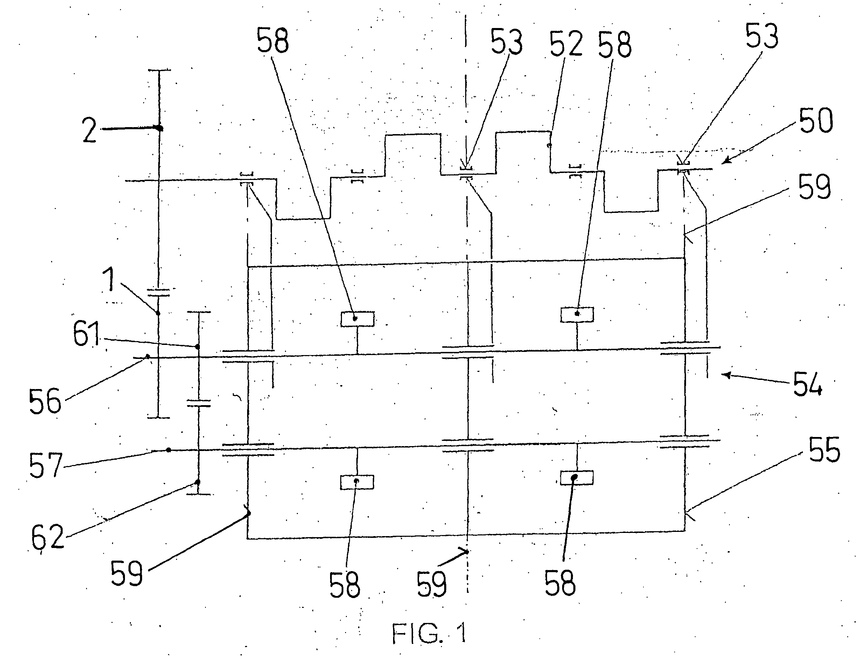

In Fig. 1 ist die Hubkolbenmaschine 50 nur durch ihre Kurbelwelle 50 und deren Grundlager 53 versinnbildlicht. Die Grundlager 53 stehen stellvertretend für den gesamten Motorblock, der sowohl in Tunnelbauweise als auch mit freien Lagerbrücken ausgeführt sein kann. Die unter der Kurbelwelle 52 am Motorblock befestigte Massenausgleichsvorrichtung ist allgemein mit 54 bezeichnet. Sie besteht aus einem Ausgleichsgehäuse 55 und zwei darin gegenläufig rotierenden Ausgleichswellen 56, 57 mit Ausgleichsgewichten 58. Strichliert sind die Normalebenen 59 durch die Grundlager 53 angedeutet. In ihr liegen auch die Lager der Massenausgleichsvorrichtung 54. Die Ausgleichswellen 56, 57 werden von einem mit der Kurbelwelle 52 drehfest verbundenen Zahnrad 2 über ein Antriebszahnrad 1 angetrieben, die Synchronräder 61, 62 sorgen für gegenläufig gleiche Drehzahl der Ausgleichswellen 56, 57.

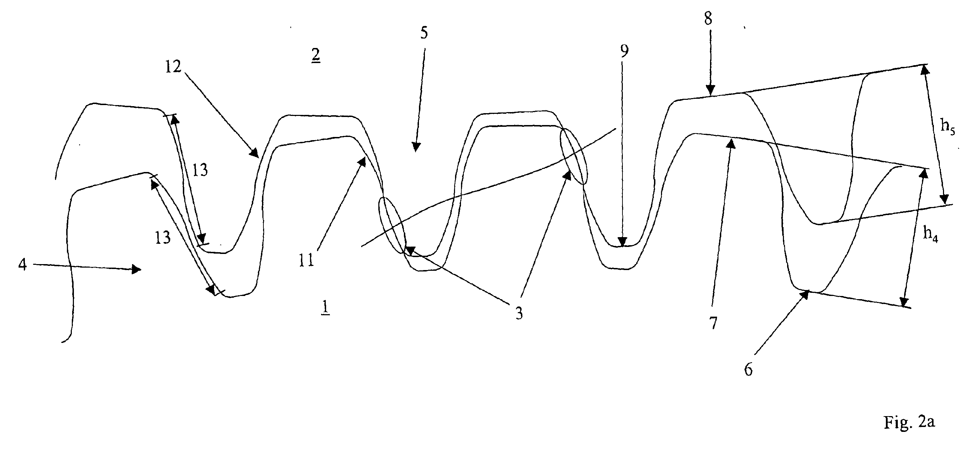

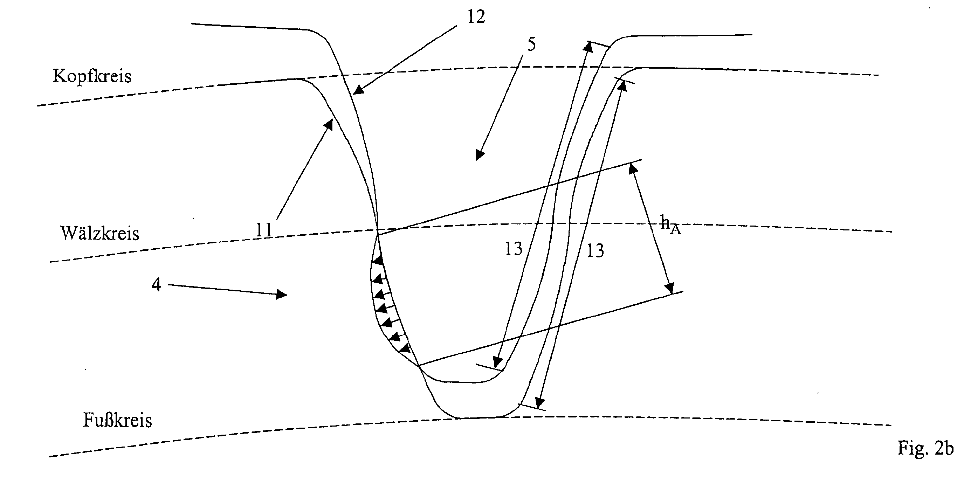

In Fig. 2a und 2b ist die Verzahnungsgeometrie der in Fig. 1 dargestellten Zahnpaarung von Zahnrad 2 und Antriebszahnrad 1 im Längsschnitt durch die Zahnräder dargestellt. Fig. 2a zeigt von oben nach unten weisend die Zähne 5 des auf der Kurbelwelle sitzenden metallischen Zahnrades 2 und von unten nach oben weisend die Zähne 4 des auf der Ausgleichswelle 56 sitzenden und aus Kunststoff hergestellten Zahnrades 1. Die Zähne 4, 5 stehen miteinander in Eingriff. Die Zähne 4, 5 weisen jeweils eine Höhe h₄ bzw. h₅ auf. Die Höhe h₄ erstreckt sich von einem Fuß 6 des Zahns 4 bis zu dessen Kopf 7. Die Höhe h₅ erstreckt sich von einem Fuß 8 des Zahns 5 bis zu dessen Kopf 9. Die Breite der Zähne 4, 5 ändert sich über die Höhe h₄ bzw. h₅ und ist abhängig von der Form der Flanken 11, 12 der Zähne 4, 5. Mit 3 sind wiederum jeweils die Bereiche gekennzeichnet, in denen sich die Zähne 4, 5 berühren, wenn sie miteinander in Eingriff stehen. Der gesamte Zahnflankenteil eines Zahnes 4, 5, welcher in Berührung mit der Zahnflanke des anderen Zahnes 5, 4 kommen kann, wird als Kraftübertragungsteil bezeichnet und ist mit dem Bezugszeichen 13 bezeichnet.

Fig. 2b ist eine vergrößerte Detailansicht von Fig. 2a von dem Bereich, in dem sich ein zahnkopfnaher Bereich eines Zahns 5 des metallischen Zahnrades mit einem zahnfußnahen Bereich eines Zahns 4 des Kunststoffzahnrades berührt. Der Anlagebereich 3 erstreckt sich über eine Höhe h_{A} der Zähne 4, 5. In dem Bereich der Anlage 3 ist die Zahnflanke 11 des Zahns 4 konkav. Der mit der Zahnflanke 11 in Eingriff stehende Bereich des Zahns 5 ist konvex ausgeführt. Die beiden Bereiche weisen eine mindestens abschnittsweise ähnliche oder dieselbe Krümmung auf, so dass sie in einem im Schnitt gesehen linienförmigen und realiter gesehen flächenförmigen Bereich zur Anlage kommen. Die wirksamen Profile der Zahnflanken 11, 12 von Zahn 5 und Zahn 4 sind über ihre gesamte Höhe h₄, h₅ aufeinander abgestimmt, so dass es über die gesamte Höhe h₄, h₅ zu gerade beschriebenen flächenförmigen und im Schnittbild gemäß Fig. 2a und Fig. 2b gesehenen, linienförmigen Anlagen 3 kommt. Im dargestellten Ausführungsbeispiel weisen die Flanken 11, 12 der Zähne 4, 5 vom metallischen Zahnrad 1 und Kunststoffzahnrad 2 jeweils in ihrem zahnfußnahen bis zum Wälzkreis reichenden Bereich ein konkaves Profil und in ihrem vom Wälzkreis ausgehenden, bis nahe an den Zahnkopf reichenden Bereich ein konvexes Profil auf. Die Profile sind bezüglich ihrer Krümmungen so aufeinander abgestimmt, dass jeweils Bereiche mit den mindestens abschnittsweise ähnlichen oder gleichen Krümmungen beim Kämmen miteinander in Berührung treten.

Die linienförmige bzw. flächenförmige Anlage 3 hat den Vorteil, dass sich die von einem Rad auf das andere Rad zu übertragende Last auf eine Fläche verteilt, wodurch die Last pro Flächeneinheit sinkt. Dadurch können sowohl der Verschleiß der Zahnräder 1, 2 als auch die Gefahr einer Überlastung erheblich reduziert werden. Es erhöht sich somit die Tragfähigkeit der Zahnräder 1, 2 deutlich im Vergleich zu Zahnrädern mit Evolventenverzahnung oder abschnittsweiser evolventischer Verzahnung, bei denen nur punktförmige Anlagen zwischen den Zähnen auftreten.

Wie Fig. 2a zeigt, befinden sich stets zwei, vorzugsweise auch drei Zahnpaare während des Wälzvorganges miteinander in Berührung, so dass die Last beim Abwälzen nicht nur auf einem einzelnen Zahn liegt, sondern sich auf drei oder bei entsprechender Dimensionierung auch auf zwei oder mehr Zähne gleichermaßen verteilen kann. Die gesamte Tragfähigkeit des Kunststoffzahnrades ist damit erhöht.

Wenngleich im oben diskutierten Ausführungsbeispiel davon die Rede war, dass das erste Zahnrad aus Kunststoff und das zweite Zahnrad aus Metall besteht, so ist die Erfindung hierauf nicht beschränkt. Es liegt vielmehr auch im Rahmen der Erfindung, das zweite Zahnrad ebenfalls aus Kunststoff zu fertigen, vorzugsweise sollte aber der Kunststoff für das zweite Zahnrad eine höhere Festigkeit als der Kunststoff des ersten Zahnrades aufweisen. Eine solche höhere Festigkeit kann z. B. durch die Wahl eines anderen Kunststoffes erreicht werden oder durch Beimengung von verstärkenden Zusatzstoffen, wie z. B. Kohlefasern oder Metallteilchen.

Des Weiteren ist anzumerken, dass die im dargestellten Beispiel offenbarte Evolventenfreiheit zwischen dem Übergang von konkaven zu konvexen Flankenteil der Zahnkontur nicht unbedingt so gewählt werden muss, wenngleich eine solche Evolventenfreiheit ideal ist. Es liegt auch im Rahmen der Erfindung, dass der Übergang mindestens annähernd evolventenfrei ist. Dabei sollte der evolventische Anteil so klein als möglich gewählt werden, z. B. weniger als 10 % des gesamten Flankenteils zwischen oberstem Zahnkopfpunkt und unterstem Zahnfußpunkt, vorzugsweise weniger als 5 % und besonders bevorzugt weniger als 1 %.

Schließlich ist noch anzumerken, dass in einer bevorzugten Ausführung der Erfindung die Zahnflankenform der miteinander kämmenden Zahnräder folgende Form haben sollte. Ausgehend vom Zahnkopf folgt eine Zahnkopfrundung, die den Zahnkopf an die tragfähige Flanke anbindet. Es folgt ein epizykloidisch gestalteter Flankenteil, der bis etwa zum Wälzkreis des Zahnrades reicht und von einem hypozykloidisch gestalteten Flankenteil gefolgt wird. Letzterer reicht bis zur Zahnfußrundung, an die sich der Zahnfuß anschließt. Bei dieser Ausgestaltung wird also der vom Zahninneren eines Zahnrades gesehen konvexe Anteil der Zahnflanke durch eine epizykloidische Flanke und der konkave Anteil durch eine hypozykloidische Flanke gebildet.

## Patentansprüche

1. Motorhilfsantrieb eines Kraftfahrzeuges mit einem Zahnradgetriebe, das ein erstes (1) und ein zweites Zahnrad (2) mit Zahnflanken (11, 12) aufweist, die miteinander in Eingriff stehen,
**dadurch gekennzeichnet, dass** die Zahnflanken (11, 12) der Zahnräder (1, 2) im Kraftübertragungsbereich (13) evolventenfrei oder zumindest annähernd evolventenfrei ausgebildet sind und von einem konkaven Bereich direkt oder zumindest annähernd direkt in einen konvexen Bereich übergehen, wobei die wirksamen Profile der Zahnflanken (11, 12) über ihre gesamte Höhe (h₄, h₅) aufeinander abgestimmt sind, so dass es über die gesamte Höhe (h₄, h₅) zu flächenförmigen und im Schnittbild gesehenen, linienförmigen Anlagen (3) kommt, und dass das erste Zahnrad (1) aus Kunststoff gebildet ist.

2. Motorhilfsantieb nach Anspruch 1, -
**dadurch gekennzeichnet, dass** das zweite Zahnrad (2) aus einem Werkstoff mit größerer Festigkeit als das erste Zahnrad (1) gebildet ist.

3. Motorhilfsantrieb nach Anspruch 1 oder 2,
**dadurch gekennzeichnet, dass** die sich gegenüberliegenden Zahnflanken (11, 12) der Zahnräder (1, 2) mindestens abschnittsweise eine annähernd gleiche Krümmung ihrer Zahnflanken (11, 12) aufweisen.

4. Motorhilfsantrieb nach einem der Ansprüche 1 bis 3,
**dadurch gekennzeichnet, dass** der konkave Bereich in einem an einen Zahnfuß (6, 8) angrenzenden Bereich und der konvexe Bereich in einem an einen Zahnkopf (7, 9) angrenzenden Bereich der jeweiligen Zähne (4, 5) angeordnet ist.

5. Motorhilfsantrieb nach einem der Ansprüche 1 bis 4,
**dadurch gekennzeichnet, dass** das zweite Zahnrad (2) aus Metall besteht.

6. Motorhilfsantrieb nach Anspruch 5,
**dadurch gekennzeichnet, dass** die Zahndicke der Zähne (5) des Zahnrades aus Metall (2) geringer ist als die Dicke der Zähne (4) des Kunststoffzahnrades (1).

7. Motorhilfsantrieb nach einem der Ansprüche 1 bis 6,
**dadurch gekennzeichnet, dass** das Zahnrad aus Kunststoff (1) eine größere Zahnbreite bzw. Zahndicke am Teilkreis des Zahnrades (1) als die Lückenweite hat.

8. Motorhilfsantrieb nach einem der Ansprüche 1 bis 7,
**dadurch gekennzeichnet, dass** das Zahnrad aus Metall (2) eine geringere Zahnbreite bzw. Zahndicke am Teilkreis des Zahnrades (2) hat als die Lückenweite.

9. Motorhilfsantrieb nach einem der Ansprüche 1 bis 8,
**dadurch gekennzeichnet, dass** beim Abwälzen der Zahnräder (1, 2) stets zwei oder mehr Zähne (4, 5) der Zahnräder (1, 2) miteinander in Eingriff sind.

10. Motorhilfsantrieb nach einem der Ansprüche 1 bis 9,
**dadurch gekennzeichnet, dass** das Kunststoffzahnrad (1) ein Spritzteil ist, das nach dem Spritzen keine weitere Behandlung erfährt.

11. Motorhilfsantrieb nach einem der Ansprüche 1 bis 10,
**dadurch gekennzeichnet, dass** das aus Kunststoff bestehende Zahnrad (1) auf eine Nabe oder auf einen Wellenteil mit Erhöhungen und/oder Vertiefungen an seinem Außenumfang aufgespritzt ist.

12. Motorhilfsantrieb nach einem der Ansprüche 1 bis 11,
**dadurch gekennzeichnet, dass** dieser zum Antrieb einer oder mehrerer Ausgleichswellen (56, 57) vorgesehen ist.

13. Motorhilfsantrieb nach einem der Ansprüche 1 bis 12,
**dadurch gekennzeichnet, dass** das erste (1) und zweite (2) Zahnrad als schrägverzahnte Stirnzahnräder ausgebildet sind.

14. Motorhilfsantrieb nach einem der Ansprüche 1 bis 12,
**dadurch gekennzeichnet, dass** das erste (1) und zweite (2) Zahnrad als geradeverzahnte Stirnzahnräder ausgebildet sind.

15. Motorhilfsantrieb nach einem der Ansprüche 1 bis 14,
**dadurch gekennzeichnet, dass** der Kunststoff für das erste Zahnrad (1) ein homogener Kunststoff ist.

16. Motorhilfsantrieb nach einem vorstehenden Anspruch,
**dadurch gekennzeichnet, dass** ausgehend vom Zahnkopf eine Zahnkopfrundung, die den Zahnkopf an die tragfähige Flanke anbindet, ein epizykloidisch gestalteter Flankenteil, der sich etwa bis zum Wälzkreis des Zahnrades erstreckt, und ein hypozykloidisch gestalteter Flankenteil, der bis zur Zahnfußrundung weist, an die sich der Zahnfuß anschließt, folgen.

## Claims

1. An engine auxiliary drive for a motor vehicle with a gear mechanism, which comprises a first gear wheel (1) and a second gear wheel (2) with tooth flanks (11, 12) that are meshed with each other,
**characterised in that** the tooth flanks (11, 12) of the gear wheels (1, 2) are free or at least nearly free of involutes in the force transmission area (13), and pass from a concave area directly or at least nearly directly to a convex area, wherein the effective profiles of the tooth flanks (11, 12) are matched to each other over their entire height (h₄, h₅), so that laminar abutting sections (3), which are linear seen in cross section, occur over the entire height (h₄, h₅),
**and in that** the first gear wheel (1) is made of plastic.

2. An engine auxiliary drive according to Claim 1,
**characterised in that** the second gear wheel (2) is made of a material having greater strength than the first gear wheel (1).

3. An engine auxiliary drive according to Claim 1 or 2,
**characterised in that** at least sections of the opposite tooth flanks (11, 12) of the gear wheels (1, 2) have nearly the same curvature of their tooth flanks (11, 12).

4. An engine auxiliary drive according to one of Claims 1 to 3,
**characterised in that** the concave area is situated in an area adjoining a tooth base (6, 8) and the convex area is situated in an area of the respective teeth (4, 5) adjoining a tooth crest (7, 9).

5. An engine auxiliary drive according to one of Claims 1 to 4,
**characterised in that** the second gear wheel (2) is made of metal.

6. An engine auxiliary drive according to Claim 5,
**characterised in that** the tooth thickness of the teeth (5) of the gear wheel made of metal (2) is less than the thickness of the teeth (4) of the plastic gear wheel (1).

7. An engine auxiliary drive according to one of Claims 1 to 6,
**characterised in that** the gear wheel made of plastic (1) has a greater tooth width or tooth thickness on the pitch circle of the gear wheel (1) than the space width.

8. An engine auxiliary drive according to one of Claims 1 to 7,
**characterised in that** the gear wheel made of metal (2) has a smaller tooth width or tooth thickness on the pitch circle of the gear wheel (2) than the space width.

9. An engine auxiliary drive according to one of Claims 1 to 8,
**characterised in that** during the rolling motion of the gear wheels (1, 2) there are always two or more teeth (4, 5) of the gear wheels (1, 2) meshed with each other.

10. An engine auxiliary drive according to one of Claims 1 to 9,
**characterised in that** the plastic gear wheel (1) is an injection-moulded part that receives no additional treatment after the injection moulding.

11. An engine auxiliary drive according to one of Claims 1 to 10,
**characterised in that** the gear wheel made of plastic (1) is injection moulded onto a hub or onto a part of a shaft having raised parts and/or depressions on its outer circumference.

12. An engine auxiliary drive according to one of Claims 1 to 11,
**characterised in that** said drive is intended to drive one or more balance shafts (56, 57).

13. An engine auxiliary drive according to one of Claims 1 to 12,
**characterised in that** the first gear wheel (1) and second gear wheel (2) are designed as helical spur gears.

14. An engine auxiliary drive according to one of Claims 1 to 12,
**characterised in that** the first gear wheel (1) and second gear wheel (2) are designed as straight spur gears.

15. An engine auxiliary drive according to one of Claims 1 to 14,
**characterised in that** the plastic for the first gear wheel (1) is a homogeneous plastic.

16. An engine auxiliary drive according to a preceding Claim,
**characterised in that** proceeding from a tooth crest there follow a tooth crest curvature linking the tooth crest to the bearing flank, an epicycloidally formed flank part extending roughly to the pitch circle of the gear wheel, and a hypocycloidally formed flank part pointing towards the tooth base curvature connected to the tooth base.

## Revendications

1. Entraînement auxiliaire d'un véhicule automobile comportant une transmission à pignons ayant un premier pignon (1) et un second pignon (2) munis de flancs dentés (11, 12), engrenés,
**caractérisé en ce que**
les flancs dentés (11, 12) des pignons (1, 2) sont réalisés dans la zone de transmission de force (13) sans ou au moins sensiblement sans forme de développante et ils passent directement ou au moins sensiblement directement d'une zone concave à une zone convexe et les profils actifs des flancs de dent (11, 12) sont accordés les uns avec les autres sur toute leur hauteur (h₄, h₅) de façon à avoir sur toute la hauteur (h₄, h₅) un appui linéaire (3), en vue en coupe et en surface, et
le premier pignon (1) est en matière plastique.

2. Entraînement auxiliaire selon la revendication 1,
**caractérisé en ce que**
le second pignon (2) est en une matière plus résistante que celle du premier pignon (1).

3. Entraînement auxiliaire selon la revendication 1 ou 2,
**caractérisé en ce que**
les flancs de dent, opposés, (11, 12) des pignons (1, 2) présentent au moins par segment, une courbure au moins sensiblement égale.

4. Entraînement auxiliaire selon les revendications 1 à 3,
**caractérisé en ce que**
la zone concave se situe dans une zone adjacente au pied (6, 8) et une zone convexe dans une zone adjacente à la tête (7, 8) de la dent respective (4, 5).

5. Entraînement auxiliaire selon les revendications 1 à 4,
**caractérisé en ce que**
le second pignon (2) est en métal.

6. Entraînement auxiliaire selon la revendication 5,
**caractérisé en ce que**
l'épaisseur des dents (5) du pignon en métal (2) est inférieure à l'épaisseur des dents (4) du pignon en matière plastique (1).

7. Entraînement auxiliaire selon les revendications 1 à 6,
**caractérisé en ce que**
le pignon en matière plastique (1) a une plus grande largeur de dent ou une plus grande épaisseur de dent au niveau des cercles primitifs du pignon (1) que la largeur de l'intervalle.

8. Entraînement auxiliaire selon les revendications 1 à 7,
**caractérisé en ce que**
le pignon en métal (2) a une largeur de dent ou une épaisseur de dent plus faible au niveau du cercle primitif du pignon (2) que la largeur de l'intervalle.

9. Entraînement auxiliaire selon les revendications 1 à 8,
**caractérisé en ce que**
lors du roulement des pignons (1, 2), deux ou plusieurs dents (4, 5) des pignons (1, 2) sont toujours en prise.

10. Entraînement auxiliaire selon les revendications 1 à 9,
**caractérisé en ce que**
le pignon (1) en matière plastique est une pièce injectée qui ne subit aucun autre traitement après l'injection.

11. Entraînement auxiliaire selon les revendications 1 à 10,
**caractérisé en ce que**
le pignon (1) en matière plastique est injecté sur un moyeu ou sur une partie d'arbre dont la périphérie a des bossages et/ou des cavités.

12. Entraînement auxiliaire selon les revendications 1 à 11,
**caractérisé en ce qu'**
il est prévu pour l'entraînement d'un ou plusieurs arbres d'équilibrage (56, 57).

13. Entraînement auxiliaire selon les revendications 1 à 12,
**caractérisé en ce que**
le premier pignon (1) et le second pignon (2) sont des pignons droits à denture en biais.

14. Entraînement auxiliaire selon les revendications 1 à 12,
**caractérisé en ce que**
le premier pignon (1) et le second pignon (2) sont des pignons à droits à denture droite.

15. Entraînement auxiliaire selon les revendications 1 à 14,
**caractérisé en ce que**
la matière plastique pour le premier pignon (1) est homogène.

16. Entraînement auxiliaire selon les revendications précédentes,
**caractérisé en ce que**
partant de la tête de dent, un arrondi de tête de dent relie la tête aux flancs porteurs, une partie de flanc de forme épicycloïdale s'étend sensiblement jusqu'au niveau du cercle primitif du pignon et une partie de flanc de structure hypocycloïdale s'étend jusqu'à l'arrondi du pied de la dent se poursuivant par le pied de la dent.
